# EUROPEAN PATENT APPLICATION

(11) **EP 4 575 416 A1**
(43) Date of publication of application: **25.06.2025**
(21) Application number: 24222577.9
(22) Date of filing: 20.12.2024
(51) Int. Cl.: G01D 11/24

(54) **PORTABLE DATA ACQUISITION SYSTEM**

(30) Priority: 22.12.2023 IT 202300027861
(71) Applicant: Fluid-A S.r.l., 40066 Pieve di Cento (BO) (IT)
(72) Inventor: CARANDINA, Alessandro, 40066 Pieve di Cento (BO) (IT); SUMAN, Alessio, 40066 Pieve di Cento (BO) (IT); ALDI, Nicola, 40066 Pieve di Cento (BO) (IT)
(74) Representative: Manzella & Associati

(57) **Abstract**

The portable data acquisition system (1) comprises a casing (2) carrying at least one connector (7) for interchangeable connection to at least one detection sensor, a processing unit (3) for processing the data, a data storage unit (4) adapted to be connected to the processing unit (3) and a power supply unit (5) adapted to power the processing unit (3). The processing unit (3), the storage unit (4) and the power supply unit (5) are contained inside the casing (2).

## Description

### Technical field

The present invention relates to a portable system for data acquisition, in particular for data acquisition in the field, even in unfavourable environmental conditions.

### Prior art

The need to acquire data in the field, outside of research and development laboratories, has long been known in several industries, for example to evaluate the performance of products, in particular machines, in real situations.

For example, this need is felt, to mention a few cases, in the automotive and shipbuilding industry or in the industry of earthmoving or mining equipment.

In addition, in the architecture-related industry, there is a need to characterise environments, for example by monitoring environmental noise in order to assess the acoustic impact of new projects. Noise also needs to be controlled in an industrial environment.

In particular, when dealing with the production of machines for the generation of heat, such as boilers, heat exchangers, burners and industrial furnaces, it is important to obtain and analyse operating data in real conditions, in order to make improvements to the products or diagnose any problems.

Finally, in the field of fluid-dynamic design, there is a need to carry out measurements of the actual operation of fluid machines, in order to validate numerical simulation models.

One of the main problems encountered in acquiring data in the field is the presence of critical issues related to the environmental conditions of the test, such as, for example, adverse weather conditions such as rain and snow or the presence of dust or mud in the acquisition area. These conditions can damage the instrumentation, especially the electronic components of the instrumentation, and compromise the correct acquisition of data.

Generally, high-performance data acquisition instruments, which guarantee a high level of accuracy, repeatability and precision, are designed for use in controlled environments, such as laboratories, and, therefore, are not suitable for transport and use in the field.

Recently, data acquisition systems have been offered, which are designed to be portable and to withstand critical conditions to a greater extent.

They generally have a data storage unit contained inside an aluminium protection casing and connected to a plurality of connectors to be connected to as many detection sensors.

However, these systems may have a degree of protection that is insufficient to guarantee the required robustness in environments exposed to particularly critical conditions, sometimes proving inadequate for the acquisition of data in the field.

Furthermore, known systems may be scarcely flexible, insofar as they can be associated with a small number and/or only with a certain type of sensors.

Some known systems have an integrated processing unit, in addition to an acquisition software, whereas others require the connection to an external electronic processor, for the displaying, the reprocessing and the analysis of the data.

In some cases, known systems include an integrated displaying screen, which, however, forces users to stand in the vicinity of the system, in order to monitor the acquired data in real time.

Finally, the software provided for these systems usually is not very adaptable to contingent needs. In addition, it is difficult to reprogram and, therefore, its use requires high-level skills on the part of the operator. Some known systems can also be associated with analysis software that can be purchased separately, which is more adaptable, but often extremely expensive.

### Disclosure

The task of the present invention is to solve the aforementioned problems, by devising a portable data acquisition system that is robust and compact, hence suitable for use in critical conditions.

A further object of the present invention is to provide a portable data acquisition system with a great versatility, adapted to acquire multiple data items of different types.

A further object of the invention is to provide a portable data acquisition system with a simple constructive and functional design, having reliable operation, versatile use, as well as relatively inexpensive cost.

The cited objects are achieved, according to the present invention, by the portable data acquisition system according to the appended claims.

The portable data acquisition system according to the invention comprises a casing carrying at least one connector for interchangeable connection to at least one detection sensor, preferably to a plurality of detection sensors, a processing unit for processing said data, a storage unit for recording the data, which is adapted to be connected to the processing unit, and a power supply unit adapted to power the processing unit.

The processing unit, the aforementioned storage unit and the power supply unit are contained inside the casing.

The casing is advantageously made in the form of a shell divided into a first base half-shell and a second covering half-shell, which are hinged at a respective edge.

The aforementioned half-shells are movable between an open configuration, in which the half-shells are spread apart, and a closed configuration, in which the peripheral edges of the half-shells are close to one another, so as to enclose and protect the contents of the casing.

Preferably, the system also comprises a module for the generation of a wireless network adapted to transmit the data detected by means of the aforementioned sensors.

The system preferably comprises at least one antenna associable with said module, which can be applied to the casing in a removable manner.

The system can usefully comprise a movable displaying device, adapted to display the data transferred by means of the wireless network.

Preferably, the system can be interchangeably connected to sensors of various types, depending on the contingent measurement need, so as to record, even simultaneously and at a high speed, data of a different nature, for example of a fluid-dynamic, energetic, vibro-acoustic type, in order to measure quantities such as speed, pressure, temperature, acceleration and acoustic intensity.

The system preferably comprises a plurality of connectors of the analogic and/or digital and/or IEPE type.

Said connectors are preferably shaped so as to connect said at least one detection sensor in such a way that, when it is connected to respective connection cables, it is effectively protected from liquids and fine dust, thus not exposing electronic components of the system, located inside said casing, to any risk of contamination.

Said connectors have a degree of protection greater than IP66, preferably equal to IP68.

Said connectors are protected against dust, sand and small-sized solid bodies and against liquids.

Preferably, said connectors are protected against water, even if immersed for more than 30 minutes at a depth of more than one metre.

Preferably, said connectors are protected against dust and water both when they are occupied by a connection and when, for they are not occupied by a connection, they are closed by means of safety caps.

The system may comprise further connectors carried on the outside of the casing to be connected to external peripheral devices, such as, in particular, a fixed displaying device or monitor, a keyboard and a mouse.

The system can further comprise an electrical socket to be connected to an external power supply source.

The aforementioned power supply unit preferably is a lithium-ion battery.

The aforementioned casing is preferably provided with a handle mounted, in a fixed or pivoting manner, on the outside of one of the half-shells.

The aforementioned casing can comprise clamping means to clamp the half-shells together in the closed configuration.

The casing is preferably made of polypropylene, so as to be lightweight.

The system is preferably available in combination with a kit of sensors adapted to be connected to the aforementioned connectors.

The portable data acquisition system according to the present invention is able to carry out high-performance field measurements, even in extreme environmental and atmospheric conditions, for it is robust and versatile, as well as easy to transport. In addition, the system according to the present invention has a high level of accuracy, repeatability and precision comparable to that of high-performance data acquisition systems suitable for use in the laboratory.

The portable data acquisition system can therefore be used in different industries, providing reliable and accurate results.

For example, the system can effectively be used in the field of fluid dynamics, for the validation of fluid-dynamic calculation models, which thus make it possible to predict the performances of the machines and of their components in different operating conditions, hence avoiding the creation of economically expensive prototypes.

Furthermore, the system can be used for test benches in research and development laboratories, but also in the field of quality control at the end of a product's production line.

### Description of the drawings

The details of the invention will become more apparent from the detailed description of a preferred embodiment of the portable data acquisition system according to the invention, illustrated by way of example in the accompanying drawings, in which:
figures 1 and 2 show a perspective view, namely a front and rear perspective view, respectively, of the portable data acquisition system, with a respective casing in a closed configuration, according to the invention;
figure 3 shows a plan view of the same system, with the casing in an open configuration;
figures 4 and 5 show a perspective view, in an open configuration, of the system according to the invention, connected to respective peripheral devices, according to different use modes;
figures 6 to 10 show, in a perspective view, respective components and accessories of the system according to the invention.

### Description of embodiments of the invention

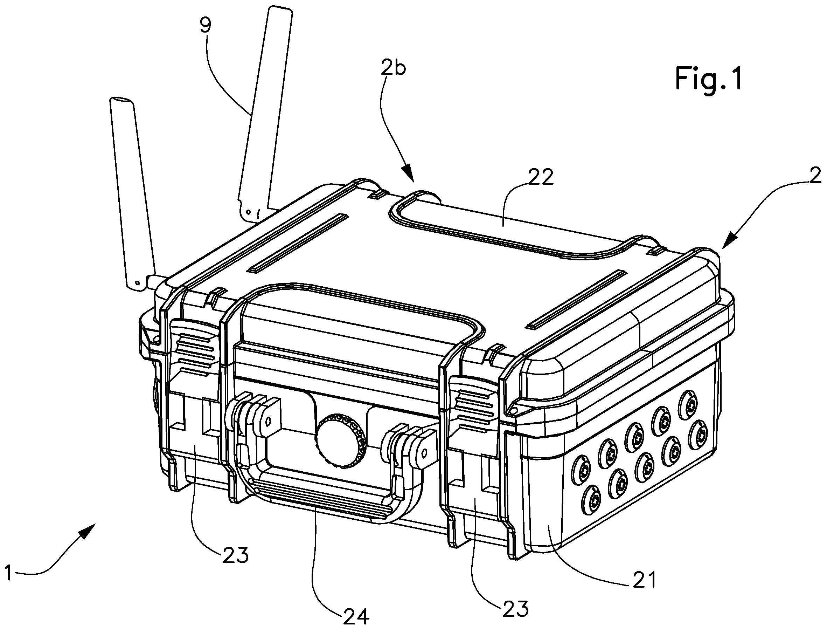

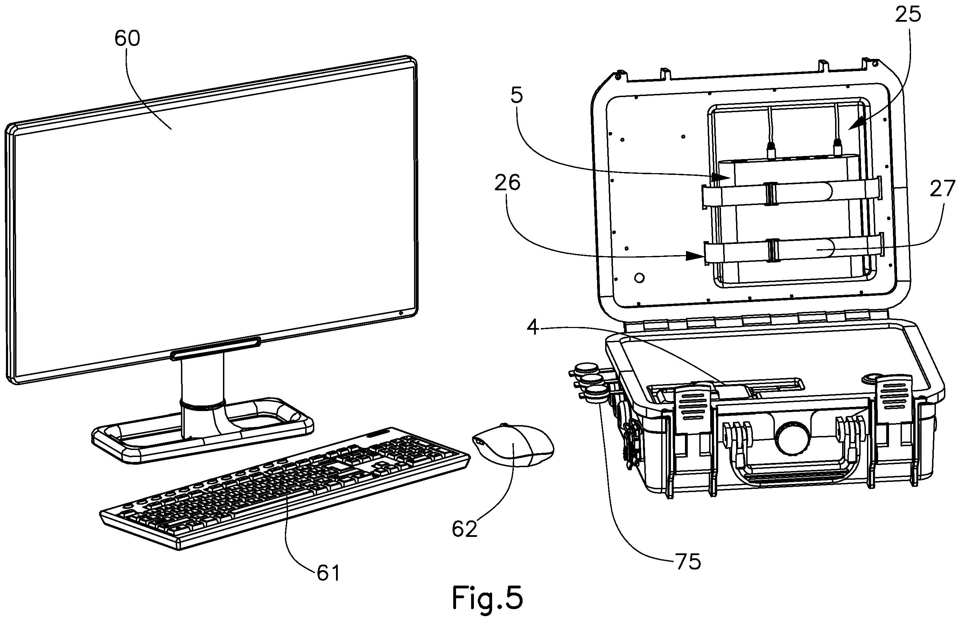

With particular reference to figures 1 to 6, number 1 indicates, as a whole, the portable data acquisition system.

The portable data acquisition system 1 comprises a casing 2, which accommodates, on the inside, a series of components, such as a processing unit 3, a data storage unit 4, a power supply unit 5 and, preferably, a module for the generation of a wireless transmission network, in particular a Wi-Fi network.

The portable system 1 can also be usefully associated with a data displaying device 6 to allow an operator, even at a distance, to view and process the data detected by sensor devices connected to the object of the analysis to be carried out, as described below. Alternatively, it can be associated with fixed peripheral devices.

In particular, the system 1 can be interchangeably connected to sensors of various types, depending on the contingent measurement need, so as to record, even simultaneously and at a high speed, data of a different nature, for example of a fluid-dynamic, energetic, vibro-acoustic type, in order to measure quantities such as speed, pressure, temperature, acceleration and acoustic intensity.

The sensors are preferably connected by means of connectors 7 integrated in the system 1 and shielded connection cables.

In particular, the system 1 can integrate at least one connector 7, preferably a series of connectors 7, of the plug and play type, as described in detail below.

The casing 2 advantageously has a compact shape.

It is preferably made in the form of a shell divided into a pair of half-shells, a first base half-shell 21 and a second covering half-shell 22.

Preferably, the first half-shell 21 and the second half-shell 22 are mutually hinged at a respective edge, so as to form a sort of transportable briefcase.

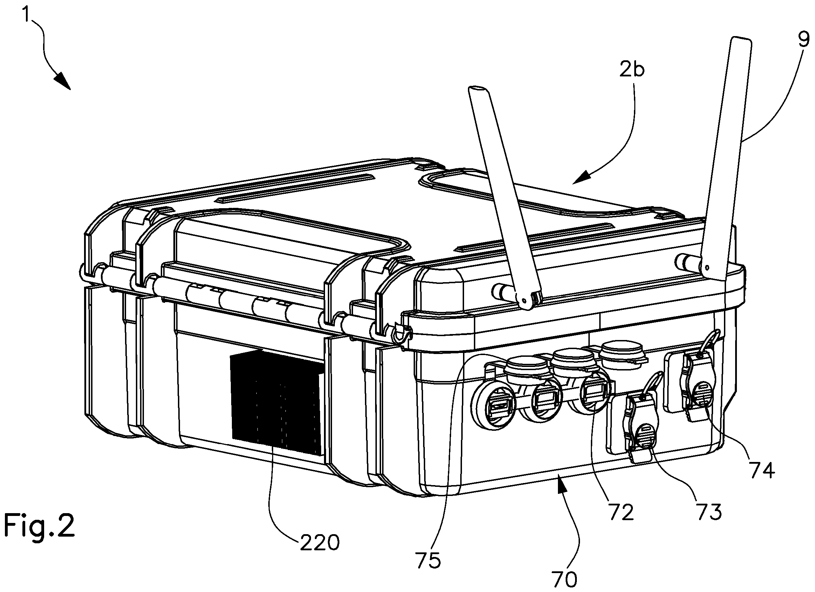

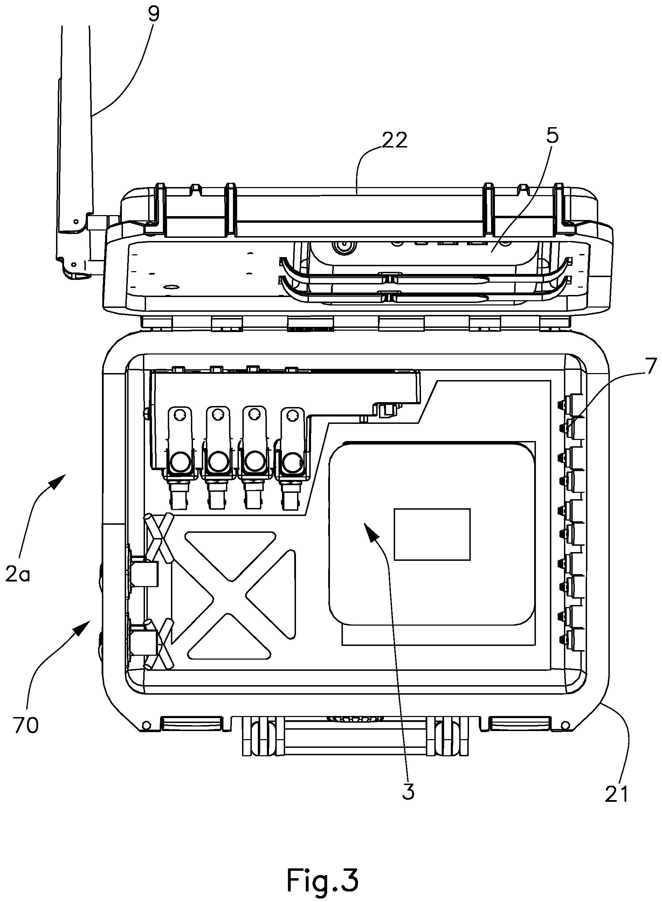

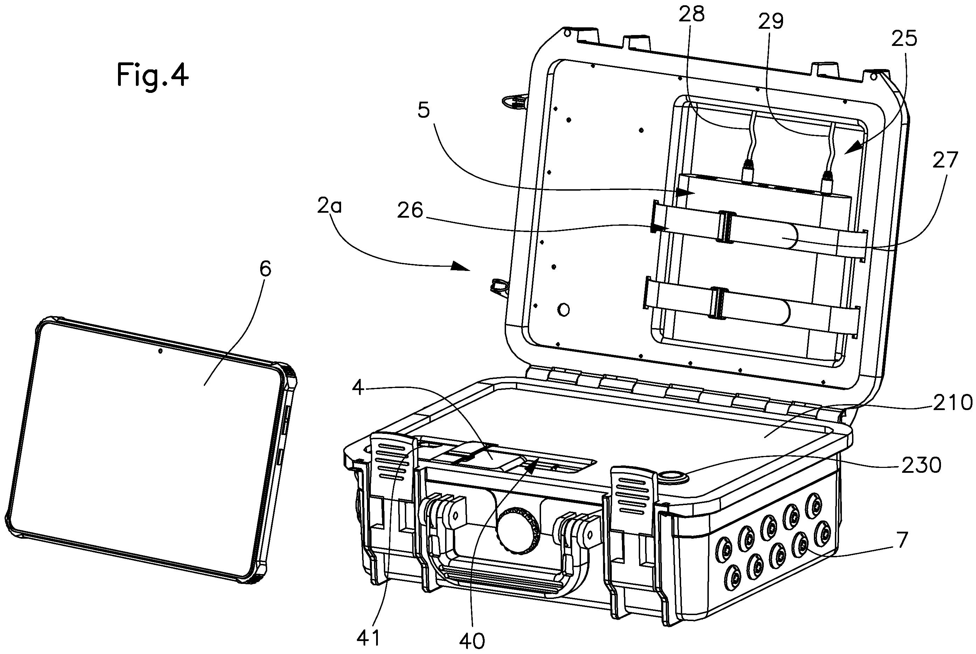

The first half-shell 21 and the second half-shell 22 are movable between an open configuration 2a, in which the half-shells 21, 22 are spread apart, at least by an angle that allows easy access to the inside of the casing 2 (see figures 3 and 4), and a closed configuration 2b, in which the edges of the half-shells 21, 22 are close to one another, so as to protect the contents of the casing 2 (see figures 1 and 2).

In particular, when the half-shells 21, 22 are in the closed configuration 2b, the casing 2 is impermeable to liquids and protects against fine dust. Therefore, the electronic components located therein are optimally protected and can effectively operate in any environment, even in the presence of critical atmospheric agents.

The casing 2 also is preferably equipped with clamping means 23 to clamp the half-shells 21, 22 in the closed configuration 2b and to prevent the contents from coming out during the transport of the system 1.

Furthermore, the casing 2 can usefully comprise a handle 24, mounted in a fixed or pivoting manner, on the outside of one of the half-shells 21, 22, for example on the outside of the first base half-shell 21, to allow a smooth and secure grip.

The casing 2 is preferably made of a lightweight and at the same time shock-resistant material, so that it can easily be transported and be resistant.

The casing 2 is preferably made of polypropylene. Therefore, the weight of the entire system, in particular thanks to the lightness of the material making up the casing 2, can be limited to about 5 kg.

The half-shells 21, 22 can have a different depth. For example, the first half-shell 21 can have a greater depth than the other, to contain the electronic components of the system 1, usefully protected by a covering plate 210.

Preferably, inside the other half-shell 22, the casing 2 forms an accessible compartment 25, for the positioning of the power supply unit 5.

The compartment 25 is preferably provided with holding means 26, for example straps or elastic bands, possibly provided with releasable closing means 27, to hold, in use, the power supply unit 5 and easily allow it to be extracted, for example to turn it on or to replace it.

Cables for the electrical connection of the system 1 are also provided in the area of the aforementioned compartment 25. In particular, there are a charging cable 28 for charging the power supply unit 5 and a power supply cable 29 for supplying power to the components of the system 1 through the power supply unit 5.

The casing 2, in particular on the plate 210, forms a seat 40 for the storage unit 4, which is accessible when the casing 2 is in the open configuration 2a. The seat 40 is preferably provided with further holding means 41, for example straps, to hold the storage unit 4 in place.

The casing 2 can usefully form, on the outside, dissipating means 220 to facilitate the dissipation of the heat that can develop inside it during operation.

The casing 2 carries, on the outside, for example on one side of the first half-shell 21, the connectors 7 associable with the sensors and with the data detection actuators.

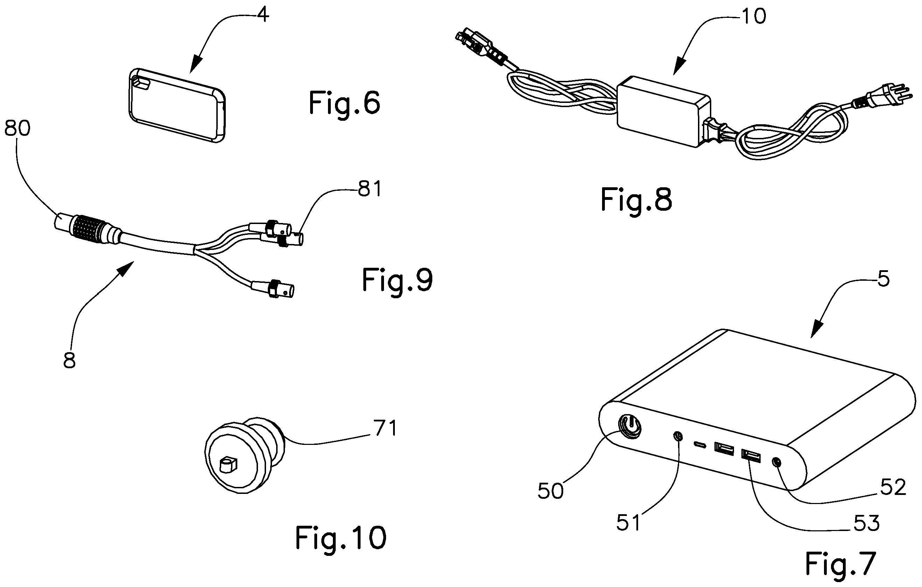

In particular, the connectors 7 are shaped in such a way that, when they are connected to respective connection cables, they are effectively protected from liquids and fine dust and, therefore, do not expose the electronic components of the system 1, located inside the casing 2, to any risk of contamination. Furthermore, even when they are disconnected, i.e. in a non-use condition, the connectors 7 can be covered with dedicated safety caps 71 and thus maintain the same degree of protection (see figure 10).

The connectors 7 have a degree of protection greater than IP66, preferably equal to IP68.

The connectors 7 are protected against dust, sand and small-sized solid bodies and against liquids.

Preferably, the connectors 7 are protected against water, even if immersed for more than 30 minutes at a depth of more than one metre.

Preferably, the connectors 7 are protected against dust and water both when they are occupied by a connection and when, for they are not occupied by a connection, they are closed by means of the safety caps 71.

In the embodiment shown in the figures by way of example, there are ten connectors 7, to allow for the detection of ten quantities at the same time. It is obviously possible to place a different number of connectors 7 on the casing 2.

In particular, the plug and play connectors 7 preferably are multipole connectors.

They can be, for example, analogic, digital, IEPE, high-sampling-frequency connectors.

For example, sensors with an analogic output, such as pressure transducers, temperature sensors, flow rate sensors and other compatible devices, can be connected to analogic multipole connectors 7.

For example, digital sensors adapted to acquire optical and magnetic data to detect the rotation speed of moving members can be connected to digital input multipole connectors 7.

Digital outputs, which can, for example, control relays for the ignition of engines and can control, thanks to PWM outputs, the speed of an electric motor, can be connected to digital output multipole connectors.

For example, accelerometers or microphones for vibro-acoustic measurements can be connected to IEPE multipole connectors 7. IEPE sensors are typically equipped with a BNC terminal connector with a bayonet coupling and, therefore, in order to be connected to IEPE multipole connectors 7 present in the system 1, they require a BNC multipole connector, which can be associated with the system 1.

Each connector 7 can connect one single sensor to the system 1 or, through the interposition of a multi-channel connector 8, it can connect several sensors to the system 1.

In particular, the multi-channel connector 8 has, at one end, a plug male connector 80, which is adapted to be inserted into one of the multipole connectors 7 of the system 1, and a plurality of, preferably three, socket female connectors 81, which are adapted to be connected, in turn, to the terminal connectors of the sensors (see figure 9).

The casing 2 can also carry, on the outside, for example on a side of the first half-shell 21 opposite the side on which the connectors 7 are located, further connectors 70 to be connected to external peripheral devices. For example, the further connectors 70 may comprise ports 72, for example of the HDMI and USB type, for connection to external peripheral devices, such as a monitor 60, a keyboard 61 and a mouse 62 or other external ground units.

The further connectors 70 can also comprise a power supply socket 73 to be connected to an external power supply source and possibly a data connection port 74, for example of the RJ45 type.

Said further connectors 70 can usefully be equipped with a respective removable protective cap 75, so as to be protected from external agents when not in use (see figure 2).

The processing unit 3 is located inside the casing 2, in particular in the inner space protected by the plate 210, to record and process the data detected by the sensors (see figure 3).

The processing unit 3 is also equipped with a power button 230, located on the plate 210 (see figure 4).

A computer program, preferably customized or customizable according to the needs of the user, is installed in the processing unit 3 to carry out the recording and processing of the data detected by the sensors.

The aforementioned program preferably is user-friendly, so that it is easy to be used even for non-expert personnel. The computer program also preferably permits a quick reconfiguration in the field according to contingent needs.

In particular, the computer program integrated in the system 1 can include advanced data analysis tools based on advanced analysis and calculation algorithms and can be used to configure the sensors, create reports and set diagrams and synopsis.

The data storage unit 4 is, in particular, a SSD solid state memory unit, which is particularly resistant to shocks.

The storage unit 4 allows the system 1 to store the detected data, so that it can be processed by the processing unit 3. Alternatively, it can be removed from the system 1 and connected to an external electronic processor.

The storage unit 4 can be connected to the processing unit 3 by means of a data transfer cable 42, preferably with a USB-C connector, protruding from the housing seat 40 of the storage unit 4.

The storage unit 4 can usefully have a large storage capacity, preferably greater than or equal to 1TB.

The storage unit 4, like the multipole connectors 7, is protected against the infiltration of water and dust.

The Wi-Fi module of the system 1 located inside one of the half-shells 21, 22 generates signals for the transmission of data, whose range can be amplified by providing antennas 9, which can externally be associated with the casing 2 of the system 1 in a removable manner. The antennas 9 are adapted to transmit data preferably by means of radio waves with a standard frequency of 2.4 GHz.

The range of the wireless network generated by the respective module of the system 1 can preferably reach, on average, a maximum distance, for example equal to 75 m, in the open field. This maximum distance covered is in any case variable, depending on the environmental conditions and on the characteristics of the structure in which the measurements are carried out.

The power supply unit 5 adapted to supply electrical energy to the system 1 preferably is a rechargeable battery. It is therefore useful, in particular, in cases where it is not possible to power the system 1 by means of an external electrical network (see figure 7).

In particular, the power supply unit 5 can be consist of a lithium-ion battery, with a power that is sufficient to supply the system 1 for a given maximum amount of time, for example several hours. It can have, for example, a capacity of 25000 mAh.

The power supply unit 5 is also equipped, in a known manner, with an on/off button 50, by means of which it is also possible to set, during the power-on phase, the output voltage.

The power supply unit 5 or Power Bank can easily be recharged by an external power supply source, if it is connected thereto by means of a dedicated power supply cable 10 of the known type (see figure 8), which can be provided with the system 1. For this purpose, the power supply unit 5 is provided with a charging socket 51.

The power supply unit 5 is also equipped, in a known manner, with a power supply socket 52 for supplying power to the portable data acquisition system 1.

Furthermore, the power supply unit 5 is preferably equipped with one or more service sockets 52, for example of the USB-A and C type.

Therefore, the power supply unit 5 is housed, in use, in the compartment 25 inside the casing 2, firmly held by the holding means 26. It can easily be removed by loosening or moving aside, as the case may be, the holding means 26, for example for preparing the system 1 or for its replacement.

The displaying device 6 can be made in the form of a movable device of the tablet type, adapted to receive and transmit data from and to the processing unit 3 by means of a connection to the network generated by the aforementioned wireless module integrated in the system 1 (see figure 4). In particular, the data contained in the storage unit 4 can be streamed, by means of the network generated by the system, to the movable device.

Alternatively, the displaying device 6 can consist of any other movable device capable of receiving data and processing it by using a computer program.

The movable displaying device 6 advantageously allows the acquired data to be displayed in real time even in case the operator moves away from the system 1.

In particular, the displaying device 6 usefully is of the rugged type, resistant to shocks and to the infiltration of water and dust, in order to be able to be used even in critical detection conditions.

The displaying device 6 can also be easily connected to the processing unit 3 and, in particular, to the storage unit 4 by means of a known cable, preferably with a USB-C connector for data transfer (see figure 4).

As already mentioned above, the system 1 can also be used in "desktop mode", in a fixed manner, as a bench instrument for data acquisition and signal generation. In this case, the system 1 can be connected to a fixed displaying device 60, for example a fixed monitor, to a keyboard 61 and to a mouse 62, through the further connectors 70 described above.

In this operating mode, it is also possible to connect the system 1 to the electrical network through the power supply socket 73, so as not to exhaust the charge of the power supply unit 5 and to be able to carry on with the detection and/or processing of the data without time limits.

The system 1 can also comprise an inner pressure compensation device, housed on the outside of the containing casing 2, to counteract excessive pressure variations, which would risk damaging the electronic components.

A kit comprising sensors and specific data acquisition and analysis programs can advantageously be associated with the system 1.

For instance, the system 1 can be associated with a kit for the analysis of vibrations, which can comprise one or more monoaxial piezoelectric accelerometers of the IEPE type and a software component for acquisition and analysis, for example RMS analysis, FFT analysis and/or spectral analysis.

Alternatively or in addition, the system 1 can be associated with kits for acoustic analysis, comprising one or more microphones and a software component for acoustic acquisition and analysis; for example, it can measure and analyse data on acoustic pressure and frequencies, as well as carry out a mapping of noise sources.

Furthermore, the system 1 can be associated with a kit for turbomachinery, useful for the characterization of pumps or compressors, comprising pressure, flow rate sensors, Pitot tube, thermo/hygrometric control units and a software component for controlling the speed of the turbomachinery, stabilizing it, sampling data, automatically generating flow/head performance curves.

The operation of the system according to the invention can be understood from the description above.

In an initial stage of preparation for use in the field, the casing 2 is placed in the open configuration 2a, preferably on a stable and horizontal surface. The inner components, in particular the power supply unit 5 and the storage unit 4 are correctly secured by means of the respective holding means 26, 41, to avoid accidental falls that could damage them at this stage.

The antennas 9 are then screwed to the casing 2, in particular to the second upper half-shell 22, to allow for the generation and amplification of the wireless data transmission network.

The protective caps 71 are removed from the connectors 7 to be used and the sensors are connected to them by means of appropriate, suitably shielded wiring, if necessary with the interposition of the multi-channel connectors 8. The sensors are further connected to respective ports carried by the objects to be monitored.

The power supply unit 4 is then disconnected from the power supply cable 29 and the charging cable 28 and is extracted from the compartment 25 of the casing 2.

The power button 50 is pressed to turn on the power supply unit 5 and set the correct working voltage.

The power supply unit 5 is then positioned again inside the compartment 25, secured by the holding means 26 and connected again to the cables 28, 29.

Subsequently, the storage unit 4 is positioned in the seat 40, secured by the holding means 41 and connected to the processing unit 3 by means of the data transfer cable 42.

The processing unit 3 of the system 1 is then turned on, by pressing the power button 230 located on the plate 210.

At this point, the casing 2 can be moved to the closed configuration 2b and locked by the clamping means 23, for a complete protection thereof.

The test operations, to be carried out to test the environment or machinery, are then started.

In order to display the detected data, it is then possible to use the movable displaying device 6.

After having turned on the movable device 6, the network generated by the wireless module, integrated in the system 1, is selected.

After having connected the displaying device 6 to the processing unit 3 by means of the wireless network, the detection and analysis phases can be displayed and managed.

As already mentioned above, the system 1 can also be used in "desktop mode", i.e. as a laboratory instrument, for data acquisition and signal generation.

In this configuration, the system 1 can be used with the power supply unit 5 connected to the electrical network so as to work continuously.

In this case, the casing 2 is kept in the open configuration 2a, in particular to permit an effective dissipation of the heat generated by the electronic components.

After having positioned the casing 2 on a stable horizontal surface, the system 1 is connected, by means of the further connectors 70, to the displaying and input peripheral devices, in particular the monitor device 60, the keyboard 61 and the mouse 62.

Like in the previous case, the sensors are connected to the system 1, in particular to the connectors 7, on one side, and to the machine or to the environment to be analysed, on the other side.

The power supply unit 5 is turned on and set up following the steps described above and the system 1 is connected to the electrical network by means of the cable 10.

After having turned on the monitor, the system 1 is turned on in order to begin the detection, the recording and the analysis of the data, operating through the keyboard 61, the mouse 62 and the monitor 60.

Therefore, the system 1 acquires data in a secure, reliable and repeatable manner, in both operating modes disclosed herein, namely on a bench or in the field.

In the actual use of the invention, the materials used as well as the shape and the dimensions can be of any kind depending on the needs.

If the technical features mentioned in each claim are followed by reference signs, such reference signs have been included for the sole purpose of increasing the understanding of the claims and, as a consequence, they do not have any limiting value regarding the purpose of each element identified by way of example by such reference signs.

## Claims

1. A portable data acquisition system (1), comprising a casing (2) carrying at least one connector (7) for interchangeable connection to at least one detection sensor, preferably a plurality of detection sensors, a processing unit (3) for processing said data, a storage unit (4) for recording said data, adapted to be connected to said processing unit (3), and a power supply unit (5) adapted to power said processing unit (3), said processing unit (3), said storage unit (4) and said power supply unit (5) being contained inside said casing (2), said system being **characterized in that** said casing (2) is made in the form of a shell divided into a first base half-shell (21) and a second covering half-shell (22), hinged at a respective edge, said half-shells (21, 22) being movable between an open configuration (2a), in which said half-shells (21, 22) are spread apart, and a closed configuration (2b), in which peripheral edges of said half-shells (21, 22) are close to one another, so as to enclose and protect the contents of said casing (2).

2. The system of claim 1, wherein said at least one connector (7) is shaped so as to connect said at least one detection sensor in such a way that, when it is connected to respective connection cables, it is effectively protected from liquids and fine dust, thus not exposing electronic components of the system (1), located inside said casing (2), to any risk of contamination.

3. The system of claim 1 or 2, wherein it comprises a plurality of said connectors (7) of the analogic and/or digital and/or IEPE type.

4. The system of any one of the preceding claims, wherein said connectors (7) have a degree of protection greater than IP66, preferably equal to IP68.

5. The system of any one of the preceding claims, wherein said connectors (7) are protected against dust, sand and small-sized solid bodies and against liquids, both when they are occupied by a connection and when, for they are not occupied by a connection, they are closed by means of safety caps (71).

6. The system of any one of the preceding claims, wherein it comprises a module for the generation of a wireless network adapted to transmit the data detected by means of said sensors.

7. The system of any one of the preceding claims, wherein it comprises at least one antenna (9) associable with said module, which can be applied to said casing (2) in a removable manner.

8. The system of any one of the preceding claims, wherein it comprises a movable displaying device (6), adapted to display said data transferred by means of said wireless network.

9. The system of any one of the preceding claims, wherein it comprises further connectors (70) carried on the outside of said casing (2) to be connected to external peripheral devices, such as, in particular, a fixed displaying device or monitor (60), a keyboard (61) and a mouse (62).

10. The system of any one of the preceding claims, wherein it further comprises an electrical socket (73) to be connected to an external power supply source.

11. The system of any one of the preceding claims, wherein said power supply unit (5) is a lithium-ion battery.

12. The system of any one of the preceding claims, wherein said casing (2) is provided with a handle (24) mounted, in a fixed or pivoting manner, on the outside of one of said half-shells (21, 22).

13. The system of any one of the preceding claims, wherein said casing (2) comprises clamping means (23) for clamping said half-shells (21, 22) together in said closed configuration (2b).

14. The system of any one of the preceding claims, wherein said casing (2) is made of polypropylene, so as to be lightweight.

15. The system of any one of the preceding claims, in combination with a kit of sensors adapted to be connected to the aforementioned connectors (7).
